**Europäisches Patentamt**

**European Patent Office**

**Office européen des brevets**

(19)

(11) Veröffentlichungsnummer : **0 435 816 A1**

## (12) EUROPÄISCHE PATENTANMELDUNG

(21) Anmeldenummer : **90810799.8**

(22) Anmeldetag : **19.10.90**

(51) Int. Cl.⁵ : **D01G 31/00, F16P 1/02, F16P 3/14**

(30) Priorität : **21.12.89 CH 4600/89**

(43) Veröffentlichungstag der Anmeldung :
**03.07.91 Patentblatt 91/27**

(84) Benannte Vertragsstaaten :
**CH DE FR GB IT LI**

(71) Anmelder : **MASCHINENFABRIK RIETER AG**
**Klosterstrasse 20**
**CH-8406 Winterthur (CH)**

(72) Erfinder : **Kyburz, Martin**
**Alfred-Brauerstrasse 17**
**CH-8450 Andelfingen (CH)**

Erfinder : **Gloor, Thomas**
**Nägelseestrasse 65**
**CH-8406 Winterthur (CH)**
Erfinder : **Aebli, Jost**
**Eckwiesenstrasse 12**
**CH-8408 Winterthur (CH)**
Erfinder : **Hanselmann, Daniel**
**Kernstrasse 17**
**CH-8406 Winterthur (CH)**
Erfinder : **Faas, Jürg**
**Seuzacherstrasse 16**
**CH-8487 Dinhard (CH)**

(74) Vertreter : **Frei, Alexandra Sarah**
**Frei Patentanwaltsbüro Hedwigsteig 6**
**Postfach 95**
**CH-8029 Zürich (CH)**

(54) **Ballenabtragmaschine mit sensorisch gesteuerter Schutzeinrichtung.**

(57)    Mindestens Während einem Initialdurchgang der Ballenabtragmaschine wird mittels mindestens einem Leitsensor (39, 40) das in Vorschubrichtung des Abtragorgans (4) liegende Gebiet abgetastet und überwacht wird. Bei Registrierung eines Ballens durch eine mit den Leitsensoren (39, 40) verbundene Auswerteinheit (30) werden die Schutzvorhänge (21-23) desaktiviert, unmittelbar bevor ein Ballen (2, 2') durch diese erfasst würde. In den folgenden Abtragdurchgängen werden die Schutzvorhänge (21-23) in Abhängigkeit des bekannten Ballenprofils und/oder des oder der Leitsensoren (39) aktiviert und desaktiviert. Bei Detektion eines Fremdgegenstandes, insbesondere Personen, werden durch die Schutzvorhänge 35, 36) Schutzmassnahmen ausgelöst werden.

EP 0 435 816 A1

FIG. 3

# BALLENABTRAGMASCHINE MIT SENSORISCH GESTEUERTER SCHUTZEINRICHTUNG

Die Erfindung liegt im Gebiet der industriellen Textilrohmaterial-Verarbeitung. Sie betrifft Verfahren zur sensorischen Steuerung eines Schutzsystems an einer Textilmaschine sowie eine Ballenabtragmaschine gemäss dem Oberbegriff des Patentanspruchs 1 bzw. 12.

Die Auflockerung von ballenförmigem Rohmaterial und die sukzessive Abgabe desselben an Reinigungs- und Kardierungsvorrichtungen werden in der Regel durch schichtweises Abtragen der Ballen mittels einer rasch rotierenden, mit Reiss-Nocken versehenen Abtragwalze bewerkstelligt. Entsprechende Ballenabtragmaschinen sind beispielsweise mit einem Abtragorgan versehen, das von oben her über die in einer Reihe angeordneten Rohtextilballen geführt wird.

Freiliegende Partien der rasch rotierenden Abtragwalze können für das Bedienungspersonal eine Gefahr sein, insbesondere dann, wenn das Personal unvorsichtig an der Maschine arbeitet. Diese Gefahr besteht immer dann, wenn der gegen unten offene Bereich des Abtragorgans mit der Abtragwalze nicht vollständig und unmittelbar über den zu bearbeitenden Ballen liegt.

Aus diesem Grunde werden bei solchen Ballenabtragmaschinen Schutzmassnahmen ergriffen. Bekannt sind bspw. mechanische Schutzeinrichtungen wie zum Beispiel Klappen, die, sobald eine gefährliche Situation entsteht, den Gefahrenbereich abdecken und ein Eingreifen in den Gefahrenbereich verhindern. Eine andere mechanische Vorrichtung mit mechanischen Schutzeinrichtungen ist aus der CH Patentanmeldung Nr. 2956/89 derselben Anmelderin bekannt. Jene Erfindung verwendet seitliche, starre oder bewegliche Schutzplatten und/oder bewegliche Abdeckungen unter den Abtragwalzen.

Des weiteren sind Schutzeinrichtungen mit einer Sensorik aus den CH Patentanmeldungen Nr. 120/89-1 und Nr. 4164/89 derselben Anmelderin bekannt. Jene Vorrichtungen gewährleisten eine Überwachung des Abtragorgans mittels Sensoren und/oder mechanischen Schutzeinrichtungen. Bei der rein sensorischen Überwachung sind im Stirnbereich und/oder seitlich des Abtragorgans Sensoren vorgesehen, die einen Schutzvorhang bilden. Dringt ein Objekt in den Überwachungsbereich ein, so wird dies durch den Schutzvorhang registriert und entsprechende Schutzmassnahmen werden ausgelöst.

Bei sensorischer Überwachung des Gefahrenbereichs des Abtragorgans besteht die Schwierigkeit, dass grundsätzlich jedes Objekt durch die Sensoren erfasst wird, insbesondere auch die Textilballen. Aus diesem Grunde wird bei einer bevorzugten Ausführungsvariante der erwähnten Ballenabtragmaschinen gemäss den CH Patentanmeldungen Nr. 120/89-1 und Nr. 4164/89 vorgeschlagen, Infrarotsensoren einzusetzen, welche die Textilballen selber grundsätzlich nicht erfassen. Bei der Verwendung von Infrarotsensoren können jedoch starke Schwankungen der Umgebungstemperatur Schwierigkeiten bieten.

Um bei Sensoren, welche auch die Ballen erfassen, unerwünschte Reaktionen der Sensorik zu vermeiden, wird schliesslich in der CH Patentanmeldung Nr. 4164/89 vorgeschlagen, das Ballenprofil zu berücksichtigen. Für die Verwendung des Ballenprofils muss dieses aber bekannt sein, oder es muss möglich sein, es durch Abtasten für die Maschine bekannt zu machen. Bei nicht bekanntem Ballenprofil oder, falls kein vorgängiges Abtasten des Ballenprofils möglich ist, reicht jene Massnahme jedoch nicht aus.

Es ist Aufgabe der Erfindung, die Ballenabtragmaschinen der erwähnten Art derart zu verbessern, dass auch bei unbekanntem Ballenprofil und/oder erschwerten Umgebungsbedingungen sensorisch gesteuerte Schutzmassnahmen zuverlässig erfolgen. Es ist des weiteren Aufgabe der Erfindung, ein entsprechendes Verfahren zu schaffen, das einen optimierten Einsatz sensorischer und/oder mechanischer Schutzvorrichtungen an einer Ballenabtragmaschine erlaubt und das es insbesondere ermöglicht, die Schutzvorrichtungen rechtzeitig zu aktivieren.

Diese Aufgabe wird durch die im kennzeichnenden Teil des Patentanspruchs 1 bzw. 12 genannten Merkmale gelöst.

Anhand der nachfolgenden Figuren sind Ausführungsbeispiele der Erfindung näher erläutert.

Fig. 1 zeigt eine Textilfaserballen-Abtragmaschine mit sensorischen Schutzvorhängen in Seitenansicht ;

Fig. 2 zeigt die Textilfaserballen-Abtragmaschine von Figur 1 in einer Draufsicht von oben ;

Fig. 3 zeigt eine Textilfaserballen-Abtragmaschine zusätzlich ausgerüstet mit Leitsensoren in Frontansicht ;

Fig. 4 zeigt schematisch das Arbeitsprinzip der durch Leitsensoren gesteuerten Schutzeinrichtung ;

Fig. 5 zeigt schematisch die Steuerung der Schutzvorrichtung und der Abtragmaschine durch die Leitsensoren ;

Fig. 6 zeigt ein System mit Paaren von Leitsensoren ;

Fig. 7 zeigt im Blockschema die Arbeitsweise der Steuerung für ein System mit Leitsensoren ;

Fig. 8 zeigt ein System mit einem Schutzvorhang aus teilweise intelligenten Schutzsensoren ;

Fig. 9 zeigt im Blockschema die Arbeitsweise der Steuerung für Schutzvorhänge mit integrierten Leitsensoren ;

Fig. 10 zeigt ein Ausführungsbeispiel der Sensoranordnung, anhand dessen Beispiele von Selbstüberwachungsverfahren aufgezeigt werden.

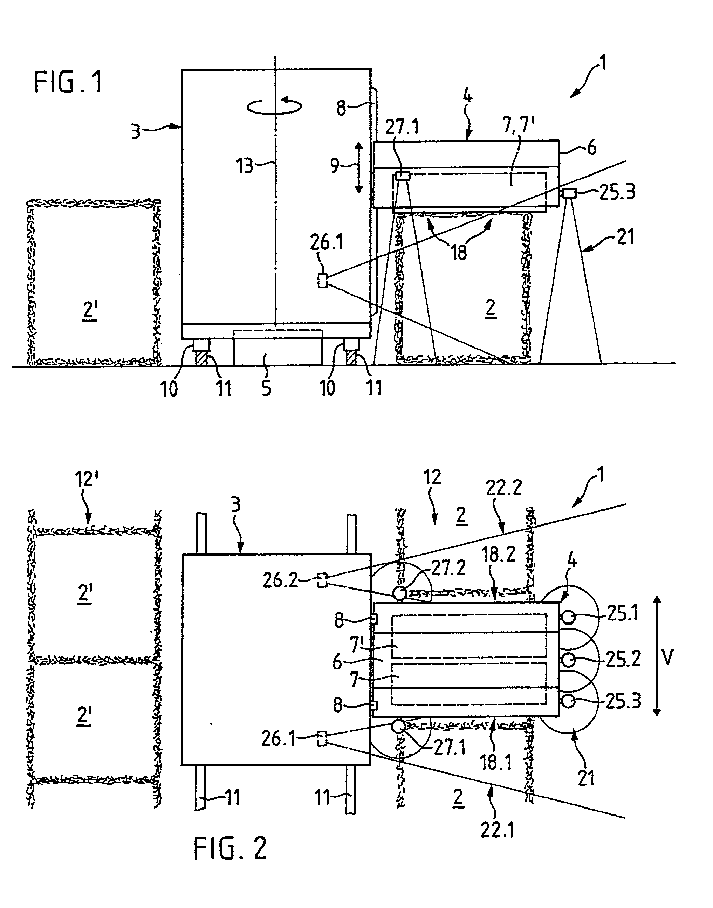

In den Figuren 1 und 2 ist eine Textilfaserballen-Abtragmaschine mit sensorischen Schutzvorhängen in Seitenansicht (Fig. 1) und in einer Draufsicht von oben (Fig. 2) dargestellt. Die Ballenabtragmaschine 1 zum Abtragen von Textilfasern, die als Faserballen 2 vorliegen, umfasst ein Maschinengestell 3 mit einem Abtragorgan 4 und einen Flockentransportkanal 5. Das Maschinengestell zusammen mit dem Abtragorgan 4 ist in den zwei Vorschubrichtungen V bewegbar.

Das Abtragorgan 4 selbst enthält eine Gehäusekonstruktion 6, in welcher eine oder mehrere rotierende Abtragwalzen 7, 7' antreibbar gelagert sind. Die durch die Abtragwalzen von den Faserballen 2 abgetragenen Faserflocken, werden durch die Gehäusekonstruktion 6 geführt und durch eine nicht eingezeichnete Ventilationsvorrichtung in bekannter Weise in den Flockentransportkanal 5 gefördert. Das Abtragorgan 4 ist längs einer Führungsschiene 8 in vertikaler Richtung (in Figur 1 durch die Pfeilrichtung 9 bezeichnet) verschiebbar, um es auf die Ballen aufsetzen, davon abheben und um es in der variablen Abtraghöhe bewegen zu können. Ausserdem ist der obere Teil der Gehäusekonstruktion um eine vertikale Achse 13 drehbar, so dass das Abtragorgan um 180° gedreht werden kann, um eine auf der Gegenseite angeordnete, zweite Reihe von Faserballen 2' abtragen zu können.

Das Maschinengestell 3 ist auf der Unterseite mit antreibbaren Rädern 10 versehen, welche es gestatten, die Textilfaserballen-Abtragmaschine 1 auf Schienen 11 entlang der Faserballenreihe 12 bzw. 12' (vgl. Fig. 2) zu verschieben. Auf diese Weise können durch Hin- und Her-Bewegung der ganzen Maschine 1 und gleichzeitigem Senken bzw. Heben des Abtragorgans 4 die in Reihe angeordneten Faserballen 2, 2' schichtweise abgetragen werden. Die Faserflocken werden kontinuierlich über den Flockentransportkanal 5 einer Weiterbearbeitung zugeführt.

An der Stirnseite des Abtragorgans 4 wird durch mehrere Sensoren 25.1-25.3 ein stirnseitiger Schutzvorhang 21 gebildet. Je seitlich des Abtragorgans 4 ist je ein seitlicher Schutzvorhang 22.1, 22.2 vorgesehen. In diesem Ausführungsbeispiel werden die seitlichen Schutzvorhänge 22.1, 22.2 je durch einen ersten Sensor 26.1, 26.2, der im seitlichen Bereich des Maschinengestells 3 angeordnet ist, und durch einen zweiten Sensor 27.1, 27.2, der seitlich am Abtragorgan 4 befestigt ist, aufgespannt. Die Anordnung der Sensoren sowie die Prinzipien der Ausgestaltung solcher Schutzvorhänge sind in den CH Patentanmeldungen Nr. 120/89-1 und Nr. 4164/89 näher beschrieben. Der Inhalt dieser Patentanmeldungen wird hier als bekannt vorausgesetzt.

## 1. Arbeitsweise und Betrieb der Sensorik

Erfindungsgemäss sollen die beschriebenen Schutzvorhänge so gesteuert oder geregelt werden, dass das Schutzsystem optimal arbeitet. Es soll mit anderen Worten bei hoher Sicherheit eine Schutzmassnahme erfolgen, wenn ein bestimmtes Objekt in den Überwachungsbereich eindringt. Umgekehrt sollen unnötige Schutzmassnahmen, vor allem Abschaltungen, vermieden werden. Als Schutzmassnahmen kommen eine Notabschaltung der Abtragwalzen (mechanische oder elektrische Bremse), das Betätigen von mechanischen Schutzmitteln (Abdeckungen, Einziehen der Walze in ein Gehäuse), Warnsignale, etc. in Frage. Die Hauptschwierigkeit liegt darin, dass seitlich des Abtragorgans zwar Schutzvorhänge unbedingt vorhanden sein müssen, dass diese aber dauernd von Textilballen durchfahren werden, die jedoch kein Schutzmassnahmen auslösen dürfen. Ähnliche Schwierigkeiten entstehen für den stirnseitigen Schutzvorhang (parallel zur Bewegungsrichtung der Abtragmaschine) in der Regel nicht.

Die Erfindung berücksichtigt drei grundsätzlich unterschiedliche Sensorprinzipien, um die obengenannte Schwierigkeit für die seitlichen Schutzvorhänge zu meistern :

– Die eingesetzten Schutzsensoren beruhen auf einem Detektorprinzip, das auf Textilballen nicht anspricht. Solche Sensoren sollen nachfolgend "ballen-neutrale Sensoren" genannt werden.

– Die eingesetzten Schutzsensoren können anhand einer zugeschalteten Intelligenz zwischen Textilballen und anderen Objekten unterscheiden, sodass aufgrund von Textilballen kein Alarmsignal generiert wird. Solche Sensoren sollen nachfolgend "intelligente Sensoren" genannt werden.

– Die eingesetzten Schutzsensoren sind weder ballen-neutral noch intelligent, werden aber von einer übergeordneten Intelligenz so gesteuert, dass sie nur dann aktiv sind, wenn eine Gefährdung wirklich möglich ist.

### 1.1. Ballen-neutrale Sensoren als Schutzsensoren

Ballen-neutrale Sensoren sind, wie bereits erwähnt, solche Detektor-Vorrichtungen, die Textilballen nicht detektieren, die also auf einen in ihren Überwachungsbereich gelangenden Textilballen nicht mit einem Alarmsignal reagieren, während sie auf ein anderes, gefährdetes Objekt mit einem Alarmsignal reagieren. Solche Sensoren können während dem Betrieb der Ballenabtragmaschine dauernd aktiv sein, ohne dass sie durch Ballen, die in den Bereich der Sensoren gelangen, Fehlalarme oder Fehl-Schutzmassnahmen auslösen. Der spezielle Vorteil des Einsatzes solcher ballenneutraler Sensoren als Schutzsensoren besteht darin, dass durch sie generierte Alarmsignale ohne weitere Verarbeitung, also auch ohne Zeitverlust, als Trigger für Schutzmassnahmen verwendet werden können.

Die Verwendung von Passivinfrarotsensoren für die Schuztvorhänge führt zu einem solchen ballenneutralen Sensorsystem. Da Textilballen dieselbe Temperatur wie die Umgebung aufweisen bzw. gegenüber diesen keine Strahlungsdifferenz besteht (Temperaturgradient über die ganze Ballenschau (inkl. Boden) $|\text{grad } T| \approx 0$), werden die Textilballen durch die Schutzvorhänge nicht erfasst. Dagegen geht zum Beispiel von einem Menschen eine Wärmestrahlung aus, so dass er detektiert wird.

Der Einsatz von ballen-neutralen Sensoren kann durch die Umgebung störend beeinflusst werden, was zu Fehlmassnahmen führen kann. Um dies zu verhindern, werden erfindungsgemäss die folgenden Korrekturmassnahmen alleine oder kumulativ ergriffen :

– Die Signale der Schutzsensoren werden verglichen mit den Signalen eines Referenzsensors, der so angeordnet ist, dass kein je gefährdetes Objekt je in seinen Bereich gelangen kann. Alarmsignale, die gleichzeitig von Schutzsensoren *und* Referenzsensor ausgelöst werden, werden unterdrückt.

– Die Signale der einzelnen Schutzsensoren werden dauernd verglichen. Gleiche Alarmsignale von Schutzsensoren, die so angeordnet sind, dass sie unmöglich gleichzeitig auf ein gefährdetes Objekt ansprechen können, werden unterdrückt.

– Die Störeinflüsse werden von einem Referenzsensor gemessen und die Empfindlichkeit der Schutzsensoren wird so geregelt, dass sie auf Störeinflüsse nicht reagieren.

Der Einsatz solcher Korrekturmassnahmen macht eine zusätzliche Verarbeitung der Sensorsignale notwendig, was einen gewissen Zeitaufwand erfordert. Bei der Wahl von solchen Korrekturmassnahmen muss beachtet werden, dass während der Zeit, in der die Sensorsignale verarbeitet werden, die Maschine sich weiter bewegt und die Gefahr näher an das gefährdete Objekt herankommt. In Abhängigkeit des Abstandes der Detektionsbereiche der Sensoren von der effektiven Gefahrenzone, der Geschwindigkeit v der Maschine und der in der Regel behördlich festgelegten, minimalen Distanz zwischen Gefahr und gefährdetem Objekt zur Zeit der Alarmauslösung kann die maximal tolerierbare Zeit berechnet werden, die für eine Auswertung der Signale zur Verfügung steht. Es müssen diejenige Korrekturmassnahmen zum Einsatz kommen, die bei noch tolerierbarem Zeitauf wand die beste Verhinderung von Fehlmassnahmen erzielt.

Der Einsatz von Passivinfrarotsensoren kann Probleme im Zusammenhang mit Wärme-Störquellen, bspw. vorhandene (kalt/warme) Luftströmungen, mit sich bringen. Um unnötige Schutzmassnahmen zu verhindern, werden durch eine Steuerung die Signale mehrerer Sensoren verknüpft und/oder es wird mindestens ein Referenzsensor eingesetzt. Durch laufenden Vergleich der Signale mehrerer Infrarotsensoren können Alarmsignale ausgelöst durch ein gefährdetes Objekt besser unterschieden werden von denjenigen, die die Umgebung, wie etwa der Boden 14, auslöst. Es kann z.B. ausgeschlossen werden, dass eine Person gleichzeitig durch zwei Sensoren erfasst wird, die um eine bestimmte Minimaldistanz auseinander angeordnet sind. In einer bevorzugten Ausführungsform beträgt diese Minimaldistanz 1,2 m. Zudem wird bevorzugterweise die gegenseitige geometrische Anordnung der Sensoren ausgenutzt. Es ist ausgeschlossen, dass eine Person *gleichzeitig* durch zwei auf verschiedenen Seiten des Abtragorgans angeordnete Schutzvorhänge erfasst wird (bspw. gleichzeitig durch den Schirm der Sensoren 26.1/27.1 und durch den Schirm der Sensoren 26.2/27.2 in Fig. 2). Werden durch die beiden Schutzvorhänge Signalverläufe erhalten, die ähnlich sind oder deren Korrelation einen bestimmten Wert erreicht, kann daraus geschlossen werden, dass ein Umgebungseinfluss vorliegt, so dass dann keine Schutzmassnahmen eingeleitet werden. Die minimalen Ansprüche, die an eine Korrelation gestellt werden soll, damit ein Alarmsignal unterdrückt wird, kann dabei für den jeweiligen Einsatzbereich vorgegeben werden.

Grundsätzlich können auch mittels eines Referenzsensors, der in einem unzugänglichen Bereich oder ausserhalb des Überwachungsgebiets der Maschine angebracht ist, Störeinflüsse ermittelt werden. Über die Sensor-Steuerung werden dementsprechend entweder die Sensoren gesteuert (z.B. Reduzieren der Empfindlichkeit), oder aber die von diesen erhaltenen Signale entsprechend gefiltert.

Bei Infrarotsensoren kann insbesondere eine Adaption der Empfindlichkeit vorgesehen werden, um ungewolltes Ansprechen zu verhindern. Durch einen Referenzsensor wird die Umgebungstemperatur gemessen. Bei tiefen Temperaturen wird die Empfindlichkeit der Sensorik zurückgesteuert oder geregelt, bei hoher Umgebungstemperatur wird die Empfindlichkeit des Systems erhöht. Dies kann durchaus geschehen, da bei einer kalten Umgebung der Temperaturunterschied Mensch-Umgebung grösser ist, so dass der Temperaturgradient am Übergang Körper/Umgebung erhöht ist, was wiederum bedeutet, dass ein Passiv-Infrarot-Detektor ein grösseres Signal erhält. Mit dieser Massnahme kann verhindert werden, dass bei kühler Umgebungstemperatur häufig vorkommende, warme Luftströmungen ein ungewolltes Signal auslösen. Eine Regelung kann bspw. in der Weise vorgesehen werden, dass in periodisch wiederkehrenden Testzyklen ein Heizkörper, der sich im Detektionsbereich z.B. eines Referenzsensors befindet, aktiviert wird. Die Amplitude des Ausgangssignals ist die zu regelnde Grösse und wird auf einem Sollwert gehalten, unabhängig von Umgebungsparametern wie Temperatur, Verschmutzung, etc. Selbstverständlich kann die Empfindlichkeit der Sensorik noch in Abhängigkeit weiterer Parameter geregelt oder gesteuert werden. Eine bevorzugte Variante besteht darin, dass zur Regelung die Sendeleistung und/oder Empfindlichkeit der Sensoren verändert wird.

In analoger Weise werden andere ballen-neutrale Sensoren beschaltet und gesteuert oder geregelt.

**1.2. Intelligente Sensoren als Schutzsensoren**

Intelligente Sensoren sind Detektorsysteme, die Textilballen zwar registrieren, die aber durch ein (eventuell intelligentes) Erkennungssystem Ballen von anderen Gegenständen unterscheiden können (z.B. ein mustererkennungsfähiges Bildverarbeitungssystem). Dazu wird vorzugsweise ein Rechner eingesetzt, der anhand des empfangenen Signals (Form, Intensität, Länge des Pulses, etc.) die Art des Gegenstandes bestimmt. Solche intelligenten Sensoren können prinzipiell gleich eingesetzt werden wie ballen-neutrale Sensoren, wobei Korrekturmassnahmen zur Ausschaltung von störenden Einflüssen direkt in die Verarbeitung des vom Detektor gelieferten Signals eingebaut werden.

Ähnlich wie bei den Korrekturmassnahmen für Signale von ballenneutralen Sensoren ist auch für dieses Konzept die Zeit massgeblich, welche der Erhalt und die Auswertung der Signale benötigen. Diese eventuell auftretende Totzeit zwischen der Detektion und der Weiterleitung eines zum Alarmsignal aufgearbeiteten Signals ist limitiert durch den Abstand zwischen dem Schutzvorhang und der effektiven Gefahrenzone (Abtragwalzen), der als gegeben angenommen wird. An solche intelligente Sensoren müssen hohe Ansprüche gestellt werden, denn sie müssen nicht nur Ballen einwandfrei identifizieren können, sondern sie müssen auch jedes andere Objekt, das aus irgend einer Richtung in den Gefahrenbereich gerät und eine fast beliebige Grösse haben kann, detektieren.

Die erstgenannte Schwierigkeit einer Totzeit kann eliminiert werden, indem mindestens ein "voraussehender" Sensor [im folgenden *Leitsensor* genannt] eingesetzt wird, ein System, das im weiteren noch beschrieben werden soll. Der Forderung der hohen Ansprüche an die intelligenten Sensoren kann dadurch Rechnung getragen werden, indem verschiedenen Sensoren des Schutzvorhangs verschiedene Aufgaben zugeteilt werden, sodass spezifischere und damit weniger aufwendige Sensoren verwendet werden können, oder dass Signale von verschiedenen Sensoren von einer Auswerteinheit zu einem "intelligenten" Signal kombiniert werden. Ein solches System stellt mit anderen Worten eine Kombination eines Systems mit intelligenten Schutzsensoren und eines Systems mit Leitsensoren dar.

**1.3. Von einer übergeordneten Intelligenz gesteurte Schutzsensoren**

Werden weder ballen-neutrale, noch intelligente Sensoren für die seitlichen Schutzvorhänge eingesetzt, wird eine übergeordnete Intelligenz eingesetzt, die entweder im Augenblick, bevor ein Textilballen den Schutzvorhang durchläuft, die Sensoren ausschaltet oder ihr Alarmsignal, wenn es von einem Ballen bewirkt wurde, unterdrückt. Eine solche übergeordnete Intelligenz muss entweder Kenntnis haben von der Anordnung der Ballen in der Reichweite der Ballenabtragmaschine, oder sie muss imstande sein, Ballen von anderen Objekten zu unterscheiden. Die übergeordnete Intelligenz wird auf zwei mögliche Arten realisiert :

– Das intelligente System lernt das anfängliche Ballenprofil entweder durch einen Lerndurchgang oder durch manuelle Eingabe einer Bedienungsperson und aktualisiert es während dem Abtragvorgang anhand des bekannten Abtragverlaufs in vertikaler Richtung.

– Das intelligente System verwertet das Signal eines dem Abtragorgan in Abtragrichtung vorgelagerten, Leitsensors, um festzustellen, wo Ballen sind und wo nicht. Offensichtlich wird also die intelligente Funktion und die Schutzfunktion hier, im Gegensatz zum Verfahren mit intelligenten Sensoren als Schutzfunktionen, räumlich und dadurch auch zeitlich getrennt, sodass der für intelligente Sensoren erwähnte Aspekt der Totzeit entfällt. Ebenso wird die an derselben Stelle genannte anspruchsvolle Aufgabe des intelligenten Schutzsensors aufgeteilt : der Leitsensor muss nur Ballen erkennen können, während die gefährdeten Objekte von den Schutzsensoren detektiert werden.

Die Idee der durch eine übergeordnete Intelligenz gesteuerten Sensorik geht davon aus, dass die Textilballen in das Schutzkonzept miteinbezogen werden. Solange das Abtragorgan 4 die Ballen seitlich nicht in freie Bereiche überlappt (vgl. Fig. 2), besteht keine Möglichkeit, dass eine Person von der Seite her in die Gefahrenbereiche 18.1, 18.2 eindringt. In diesem Fall brauchen die Sensoren der seitlichen Schutzvorhänge 22.1, 22.2 nicht aktiv zu sein. Es können also mit anderen Worten während des Abtragprozesses zeitliche bzw. örtliche Stadien festgestellt werden, während denen die Sensoren der seitlichen Schutzvorhänge 22.1, 22.2 nicht aktiv zu sein brauchen, da die Schutzfunktion dann von den Textilballen ausgeübt wird.

Das Ballenprofil, das für die Durchführung des erstgenannten Verfahrens für die Steuerung der Schutzsensoren bzw. das Aktivieren resp. Desaktivieren der Überwachungsbereiche erforderlich ist, kann in herkömmlicher Weise bestimmt werden. Ein Verfahren zur Bestimmung des Ballenprofils ist bspw. aus der DE-Patentschrift Nr. 39 26 482.3 bekannt.

In modernen Anlagen wird das Ballenprofil regelmässig gemessen und die Daten in einem Computer gespeichert und ausgewertet. Sie stehen also auch für die Steuerung des Sicherheitssystems zur Verfügung.

Kenntnis über das Ballenprofil wird *im ersten Durchgang* der Abtragmaschine erworben. Während diesem ersten Durchgang wird mit Hilfe der Sensoren ein topographisches Bild der Ballenschau eingelesen, das dann in einem Rechner abgespeichert wird. In den folgenden Arbeitsdurchgängen wird diese Information dazu benützt, die Überwachungsbereiche den Ballenformen entsprechend zu steuern. Dabei wird berücksichtigt, dass die um den Gefahrenbereich gebildete Hülle aus Überwachungsräumen und festen Gegenständen (Ballen) in jedem Zeitpunkt geschlossen gehalten wird. Man setzt also zum Beispiel Taster als Sensoren ein und steuert deren maximale Erfassungsbereiche entsprechend der Ballenform. D.h. man steuert deren maximalen Erfassungsbereiche dicht über die Oberfläche der Ballen oder des Bodens. Tauchen Objekte innerhalb des gesteuerten Erfassungsbereiches der Sensoren auf, können sie nicht zum Ballenprofil gehören, sondern es muss sich um gefährdete Objekte handeln. Bei der Verwendung von Distanzmessgeräten können die Sensoren während dem Arbeitsvorgang laufend die Distanz zwischen dem Abtragorgan und dem darunter liegenden Objekt (Boden, Ballen oder Störgegenstand) messen, wobei das bekannte Ballenprofil mit den erhaltenen Messwerten verglichen werden kann. Es ist sinnvoll, wenn jedes detektierte Objekt zu einem Alarmsignal führt. Offensichtlich ist es mit diesem Verfahren einfach, den Raum über Ballen, die aus irgend einem Grunde niedriger sind als die restlichen Ballen der Reihe, als Gefahrenraum ebenfalls zu überwachen.

Da sich die Höhe der Ballenschau infolge des Abtragprozesses und damit die Arbeitshöhe des Abtragorgans während dem Abtragvorgang verändert, muss das gespeicherte Bild der Ballenschau dauernd aktualisiert werden, damit das beschriebene Verfahren sinngemäss durchgeführt werden kann. Dies ist kein Problem, da die Zustellung des Abtragorgans bekannt ist. Es ist auch denkbar, periodisch Kontrollmessungen zu machen, um die Werte der errechneten Ballenformen zu überprüfen bzw. zu korrigieren. Dazu braucht der Überwachungsbetrieb und somit der Bearbeitungsbetrieb nicht unterbrochen zu werden, da diese Kontrollmessungen in sehr kurzer Zeit (< 0,1 sec) ausgeführt werden können.

Ein Nachteil des Verfahrens mit bekannter Ballenschau besteht in der Notwendigkeit des Initial-Durchlaufs, zum erstmaligen Erfassen des Ballenprofils. Dieser Initial-Durchgang muss also entweder mit stillstehenden Abtragwalzen oder mit sehr limitierter Schutzeinrichtung durchgeführt werden, wenn für ihn nicht ein spezielles Schutzverfahren zur Verfügung steht (z.B. mechanische Schutzeinrichtungen). Deshalb wird nun vorzugsweise das zweitgenannte Verfahren mit Leitsensoren eingesetzt. Diese Leitsensoren liefern ein Signal, anhand dessen entschieden werden kann, ob ein in den Bereich der Schutzsensoren kommendes Objekt ein Ballen ist. Sind solche Sensoren installiert, können diese auch als Leitsensoren während des ganzen Abtragvorgangs betrieben werden, was dann das Aufnehmen und Aktualisieren des Ballenprofils überflüssig macht. Dieses Verfahren ist auch vorteilhaft für die Nachrüstung älterer Einrichtungen, die nicht über die Fähigkeit verfügen, das Ballenprofil speichern und dieses während dem Abtragvorgang aktualisieren zu können.

Für das Verfahren mit Leitsensoren können als Schutzsensoren Sensoren verwendet werden, die auch die Textilballen erfassen, insbesondere Ultraschall- und optische Sensoren. Da der stirnseitige Bereich des Abtragorgans 4 die Ballen grundsätzlich überlappt, sind die entsprechenden Sensoren 25.1-25.3 permanent aktiv. Das Aktivieren der seitlichen Schutzvorhänge hängt im wesentlichen von der Position des Abtragorgans in Bezug auf die in der Ballenreihe positionierten Ballen ab.

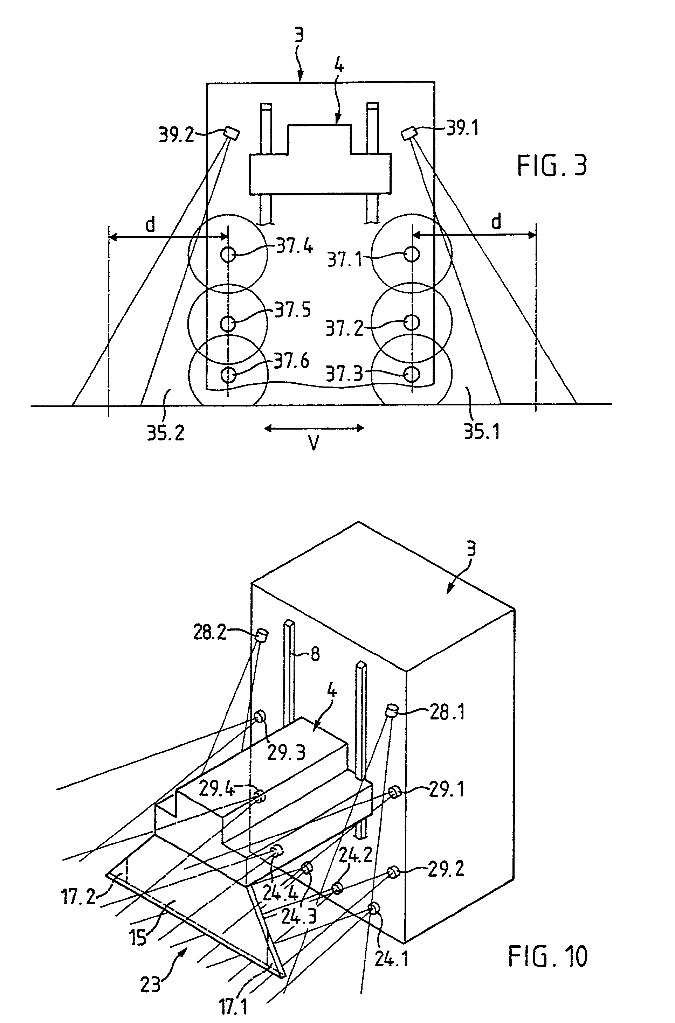

Eine Ausführungsform der zur Durchführung des Verfahrens mit Leitsensoren notwendigen Vorrichtung ist in Figur 3 anhand einer von seiner Stirnseite her betrachteten Ballenabtragmaschine verdeutlicht. Das vertikal verstellbare Abtragorgan 4 ist an einem in Richtung des Pfeils V bewegten Maschinengestell 3 befestigt. Sechs horizontal ausgerichtete Ultraschalldetektoren 37.1-37.6 bilden seitlich vom Abtragorgan 4 zwei vertikale Schutzvorhänge 35.1, 35.2. Zwei je einem der Schutzvorhänge zugeordnete Leitsensoren 39.1, 39.2 erfassen einen Raum seitlich der Schutzvorhänge in einem Abstand d von diesen.

Als Leitsensoren werden hier Distanzmessgeräte verwendet. Vorzugsweise arbeiten diese auf Ultraschallbasis. Selbstverständlich ist es auch möglich, einfache Taster zu verwenden, wobei man dann allerdings — eventuell auf Kosten der Sicherheit — nicht die maximal mögliche Information erhält. Die Leitsensoren 39.1, 39.2 erfassen hier Objekte, insbesondere Ballen, zeitlich *vor* einer allfälligen Detektion durch die Schutzvorhänge. Diese Zeitdifferenz wird genutzt, um durch die Leitsensoren Information zu erhalten und auszuwerten, in dem Sinne, dass Ballen von anderen eventuell detektierten Objekten unterschieden werden. Das Erfassungsgebiet der Leitsensoren erfasst die sich entlang der Ballenabtragstrecke befindlichen Objekte bevor diese in den Bereich eines Schutzvorhangs kommen, wobei diese Zeit mindestens dem Wert $t_d$ = d/v entspricht. (v = Relativgeschwindigkeit Maschine/Ballen ; d = Distanz zwischen Erfassungsbereich des Leitsensors und Erfassungsbereiche des Schutzvorhangs).

Die Schutzsensoren werden dann entsprechend der Art des detektierten Objektes gesteuert, das heisst, sie werden aktiviert/desaktiviert, ihre Reichweite wird verstellt, die Leitung für Alarmsignale wird über eine entsprechende Filterung geleitet oder es werden andere oder zusätzliche Massnahmen ergriffen. In einer besonderen Ausführungsvariante dieser Anordnung gemäss Fig. 3 werden die Ultraschalldetektoren 37.1-37.6 und/oder die Leitsensoren 39.1, 39.2 höhenverstellbar angeordnet, so dass sie der Bewegung des Abtragorgans 4 folgen können.

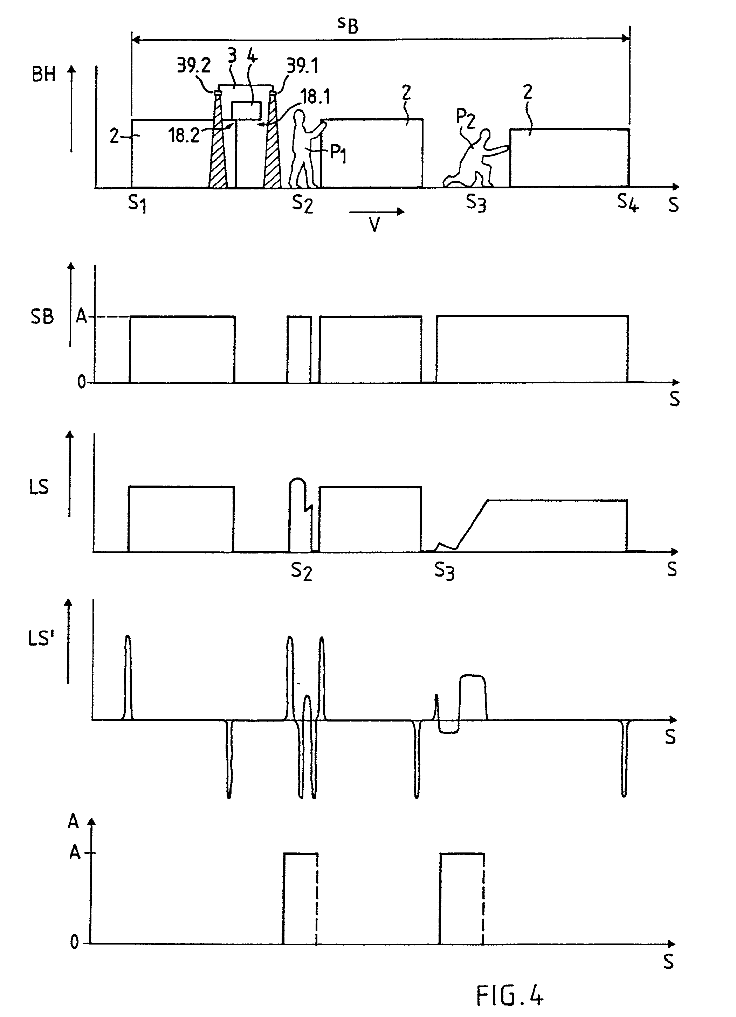

Figur 4 verdeutlicht das erfindungsgemässe Verfahren an einem konstruierten Beispiel. Im obersten Abschnitt der Figur (Diagramm BH) ist schematisch eine Ballenanordnung auf einem Streckenabschnitt $s_B$ zwischen den beiden Stellen $S_1$ und $S_4$ eingezeichnet. An den Stellen $S_2$ und $S_3$ in diesem Streckenabschnitt $s_B$ befindet sich je eine Person $P_1$ und $P_2$. Diese Personen sind durch das sich in Richtung V über die Ballen 2 bewegende Abtragorgan 4 potentiell gefährdet. Die seitlichen Gefahrenbereiche 18.1, 18.2, denen die Erfassungsbereiche zweier am Maschinengestell 3 angebrachter Leitsensoren 39.1, 39.2 vorgelagert sind, bewegen sich zusammen mit dem Abtragorgan in Vorschubrichtung.

Im darunter liegenden Diagramm SB ist das "Bild" abgebildet, das ein weder ballen-neutraler noch intelligenter Schutzsensor vom Sachverhalt des Diagramms BH zeichnen würde, wobei zwei Niveaus vorhanden sind : Null für "kein Alarm" und A für "Alarm". An diese Schutzsensoren wird ein hoher Anspruch in bezug auf Empfindlichkeit gestellt. Sie müssen jedes Objekt in ihrem Erfassungsbereich detektieren. Aus diesem Grunde bewirkt sowohl jeder Ballen, als auch jedes andere Objekt ein Alarmsignal. Es ist nun Aufgabe der übergeordneten Intelligenz, ein durch Ballen ausgelöstes Alarmsignal zu erkennen und zu unterdrücken.

Im zweiten Diagramm LS ist das durch die Leitsensoren 39.1, 39.2 erfasste "Bild" über den Streckenabschnitt $s_B$ eingezeichnet, hier bspw. für den Fall, dass als Leitsensor ein Distanzsensor eingesetzt wird. Die Höhe aller Objekte wird als Funktion der Strecke s darstellt. Die beiden Personen $P_1$ und $P_2$ werden ebenfalls erfasst und sind aus dem Signalverlauf an den Stellen $S_2$ und $S_3$ ersichtlich. Um in einem solchen "Bild" der Objekte im Arbeitsbereich der Ballenabtragmaschine Ballen von anderen Objekten unterscheiden zu können, kann z.B. die Tatsache ausgenützt werden, dass die Ballen im wesentlichen eine rechteckige Form haben, dass also ihre Oberflächen entweder senkrecht oder waagrecht sind, was zum Beispiel für einen gefährdeten Menschen nicht zutrifft. Ferner kann auch noch die Tatsache beigezogen werden, dass ein Ballen oder eine Reihe von Ballen eine minimale Länge hat. Im darunter liegenden Diagramm LS' ist des weiteren die Ableitung des Signalverlaufs des Diagramms LS schematisch dargestellt. Ballen sind durch einen positiven Ausschlag und einen negativen Ausschlag begrenzt, zwischen denen die Ableitung Null ist. An den Stellen $S_2$ und $S_3$ beinhaltet das Diagramm auch noch andere Werte, also kann es sich hier nicht um einen Ballen handeln. Der erste (positive) Ausschlag für den Menschen an der Stelle $S_2$ könnte zwar für eine nicht sehr genaue Interpretation den Beginn eines Ballens vortäuschen. Da aber sofort ein negativer Ausschlag folgt, ist die Bedingung der minimalen Ballenlänge nicht erfüllt, sodass ein Ballen ausgeschlossen werden kann.

Soll nun der Signalverlauf des Diagramms LS' zur Steuerung der Schutzsensoren verwendet werden, heisst das, dass ein positiver Minimalausschlag, nach dem die Grösse LS' Null wird und bleibt, die Schutzsensoren desaktiviert, der darauffolgende negative Minimalausschlag die Schutzsensoren wieder aktiviert. Dabei muss darauf geachtet werden, dass das System das Verbleiben des Signals LS' auf Null nur solange verfolgen darf, bis das beobachtete Objekt in den Bereich der Schutzsensoren gerät, das heisst also, bis die Abtragmaschine die Strecke d (siehe Figur 3) zurückgelegt hat, denn spätestens dann müssen die Schutzsensoren für einen Ballen desaktiviert sein. Das heisst mit anderen Worten, dass für ein System mit geringer Auflösung, das einen aufrechten Menschen z.B. nur als Rechteck wahrnimmt, die Strecke d mindestens der Breite eines aufrechten Menschen entsprechen muss. Die Schutzsensoren des (bezogen auf die Vorschubrichtung) hinteren Schutzvorhangs werden zusätzlich mit einer Verzögerung $\Delta t$, die (bei einer bestimmten Vorschubgeschwindigkeit v) dem Abstand zwischen dem vorderen und dem hinteren Schutzvorhangs entspricht, desaktiviert und auch wieder aktiviert. Bei diesem Verfahren ist speziell darauf zu achten, dass beim Einschalten der Maschine (Arbeitsbeginn) die Schutzsensoren der Lage des Abtragorgans oder genau genommen der Lage des Leitsensors entsprechend aktiviert oder nicht aktiviert sind.

Das letzte Diagramm der Figur 4 zeigt nun das von den gesteuerten Schutzsensoren an die vorhandenen Schutzvorrichtungen weitergeleitete Signal, wobei wiederum Null kein Alarm, A Alarm bedeutet. Es ist offensichtlich, dass die Sensoren an den Stellen $S_2$ und $S_3$, wo sich die Menschen befinden, Alarmsignale abgeben.

Die Figur 4 könnte insofern missverstanden werden, als dass sie den Schein erwecken könnte, die sich zwischen den Ballen aufhaltenden Menschen *müssten von den Leitsensoren* detektiert werden. Dies ist aber nicht so, im Gegenteil, sie soll nur aufzeigen, dass die Leitsensoren ihre Aufgabe, nämlich zu entscheiden, ob die Abtragmaschine sich auf einen Ballen zu bewegt oder nicht, auch fehlerfrei ausüben, wenn sich andere Objekte zwischen den Ballen befinden. Wenn der Leitsensor ein gefährdetes Objekt effektiv erkennen kann, ist es nicht notwendig, auf die Schutzsensoren zu warten, um einen Alarm auszulösen. In einem solchen Fall kann und soll der Leitsensor das Alarmsignal direkt auslösen. Üblicherweise wird aber der Erfassungsbereich der Leitsensoren kleiner sein als der Erfassungsbereich der Schutzsensoren, ebenso kann ihre Empfindlichkeit schwächer sein als diejenige der Schutzsensoren, sodass sie nur in Ausnahmefällen, eben, wenn ganze Menschen sich zwischen den Ballen aufhalten, fähig sein werden, gefährdete Objekte mit Sicherheit zu detektieren. Ihre *Hauptaufgabe* ist es, festzustellen, ob die Abtragmaschine sich einem Ballen nähert und damit die Schutzfunktion von den Schutzsensoren auf den Ballen übergeben werden kann oder nicht.

Die anhand von Figur 4 beschriebene, erste Ausführungsbeispiel der Erfindung kann den Raum über einem Ballen, der niedriger ist als die umgebenden Ballen, nicht überwachen. Ein solcher Freiraum über einem Ballen stellt aber für unvorsichtiges Bedienungspersonal dennoch eine Gefährdung dar. Um solche Räume in den Schutzbereich der Schutzsensoren einbeziehen zu können, wird in einer bevorzugten Variante des Verfahrens die Höhe der Ballen z.B. durch den Leitsensor registriert und der Schutzvorhang der Schutzsensoren mit entsprechenden Massnahmen um die Höhe des aktuellen Ballens reduziert. In analoger Weise kann dadurch ein unter speziellen Umständen erforderliches Abheben des Abtragorgans über die Ballen berücksichtigt werden. Es wird mit anderen Worten das Überwachungsgebiet der Schutzvorhänge 21-23 in Abhängigkeit des durch die Leitsensoren 39 ermittelten oder berechneten Ballenprofils laufend derart angepasst, dass der durch die Textilballen 2, 2' eingenommene Raum durch die Schutzvorhänge 21-23 nicht erfasst wird.

Der spezielle Vorteil des Verfahrens mit Leitsensoren gegenüber den Verfahren mit nur Schutzsensoren (ballenneutral oder intelligent) liegt darin, dass die Aufgaben auf verschiedene Sensoren verteilt werden kann, sodass sehr spezielle und deshalb sehr präzise Sensoren verwendet werden können. Ferner ist das System durch die Auswertung des Signals des Leitsensors beim Eintreffen eines Alarmsignals von den Schutzsensoren bereits in einen solchen Zustand gesetzt, dass es möglich ist, ohne Zeitverlust zur weiteren Verarbeitung des Alarmsignals der Schutzsensoren Schutzmassnahmen einzuleiten.

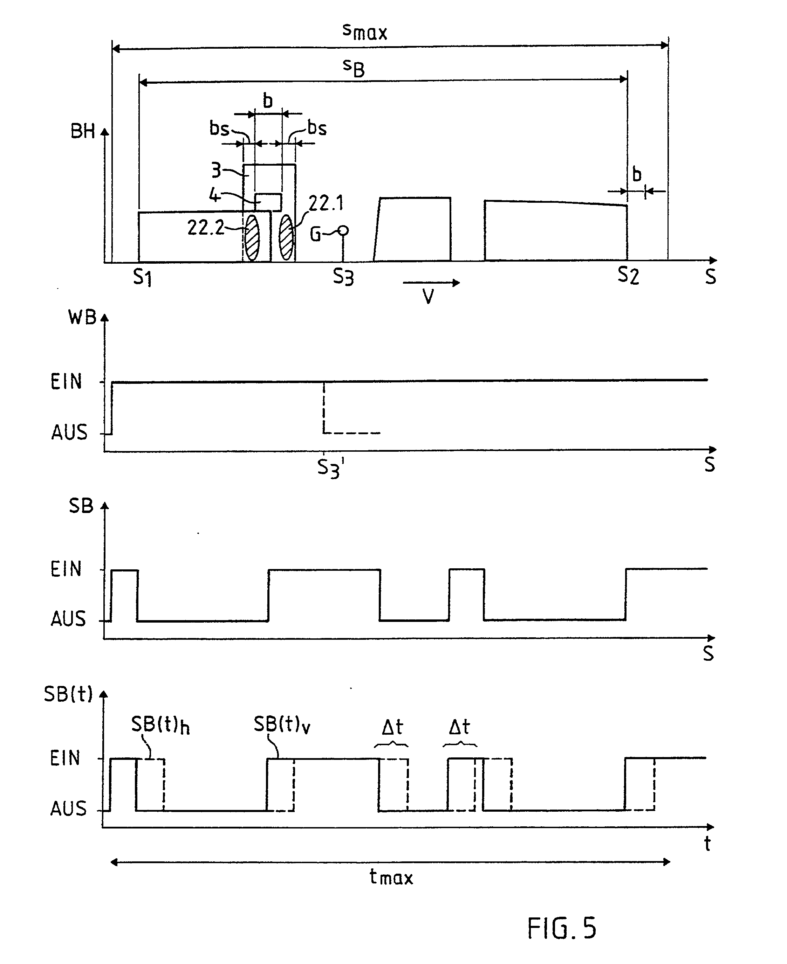

Figur 5 zeigt nun näher die Nutzung der Leitsensor-Signale für die Steuerung der Schutzvorhänge bzw. des Maschinenbetriebs. Im obersten Diagramm BH dieser Figur 5 ist wiederum ein beispielhaftes Ballenprofil über eine Strecke $s_B$ eingezeichnet. Ein Störgegenstand G (bspw. Arm eines Menschen) ist im mittleren Bereich des Streckenabschnitts an einer Stelle $S_3$ eingezeichnet. Mit $s_{max}$ ist die maximale Distanz angegeben, in der überhaupt Ballen angeordnet werden (bzw. das Abtragorgan positioniert werden kann). Zur Veranschaulichung ist ebenfalls das Maschinengestell 3 mit dem Abtragorgan 4 schematisch angedeutet. Das Abtragorgan 4 besitzt eine Breite b und bewegt sich zusammen mit dem Maschinengestell 3 in Richtung des Pfeiles V.

Im darunterliegenden Diagramm WB ist der Verlauf des Walzenbetriebs dargestellt. Dabei bedeutet EIN, dass die Walzen rotieren. Mit AUS wird angedeutet, dass entweder die Walzen abgeschaltet sind oder sonstige Schutzmassnahmen getroffen sind, die eine Verletzungsgefahr ausschliessen (bspw. Abdeckung der Walzen).

Das dritte Diagramm zeigt die Sensorbereitschaft SB in Abhängigkeit der Position des Abtragorgans. Es ist ersichtlich, dass Sensorbereitschaft, also das aktive sensorische Überwachen mittels der Schutzvorhänge 22, und mechanisches Abschirmen des Abtragorgans 4 durch die Textilballen lückenlos abwechseln. Es ist des weiteren leicht ersichtlich, dass auf diese Weise gewährleistet ist, dass in Bereichen, in denen Personen eindringen können, diese wegen der aktiven Sensorbereitschaft erfasst werden.

Das unterste Diagramm stellt schliesslich die auf die *Zeit* bezogene Sensorbereitschaft SB(t) dar. Mit $t_{max}$ ist die Zeit bezeichnet, welche die Maschine zum Durchfahren der maximalen Distanz benötigt. Mit $SB(t)_v$ ist das sensorische Aktivieren des sich in Fahrtrichtung vorne befindlichen Schutzvorhangs 22.1, mit $SB(t)_h$ dasjenige des Schutzvorhangs 22.2 bezeichnet. Der in Fahrtrichtung hintere Schutzvorhang wird immer mit der Verzögerung $\Delta t$ desaktiviert und wieder aktiviert. Beim Abschalten der Maschine muss die Sensorbereitschaft bestehen, bis die Walzen gänzlich stillstehen.

Der eingetragene Gegenstand G an der Stelle $S_3$ fällt offensichtlich in einen Streckenabschnitt, auf dem die Schutzsensoren aktiv sind, löst also ein Alarmsignal aus, durch das Schutzmassnahmen eingeleitet werden. Diese bestehen hier aus einem Abschalten des Walzenbetriebs (sowie allfälligen Warnmassnahmen). Zu diesem Zeitpunkt befindet sich das Abtragorgan noch an einer Stelle $S_3'$. Die Laufzeit des Abtragorgans bis zum Gegenstand G (Zeit zwischen $S_3'$ bis $S_3$) reicht aus, um die Schutzmassnahme effektiv werden zu lassen. Das Abschalten des Walzenbetriebs ist in Figur 5 im Diagramm (WB) durch eine gestrichelte Linie angedeutet.

Die notwendige Distanz d zwischen Überwachungsbereich und Erfassungsgebiet des Leitsensors bzw. der Leitsensoren ist nur abhängig von der Zeit, die die Intelligenz benötigt, um zu entscheiden, ob der detektierte Gegenstand ein Ballen ist oder nicht und um den Status der Schutzsensoren entsprechend einzustellen. Der notwendige Abstand $b_s$ des

Erfassungsbereiches der Schutzsensoren von der effektiven Gefahrenzone (Abtragorgan bzw. Abtragwalzen) ist einerseits abhängig von der Zeit, die benötigt wird, um Schutzmassnahmen in Kraft zu setzen, und andererseits von der maximalen Relativgeschwindigkeit, mit der sich ein gefährdetes Objekt in Richtung des Gefahrenbereichs bewegen kann.

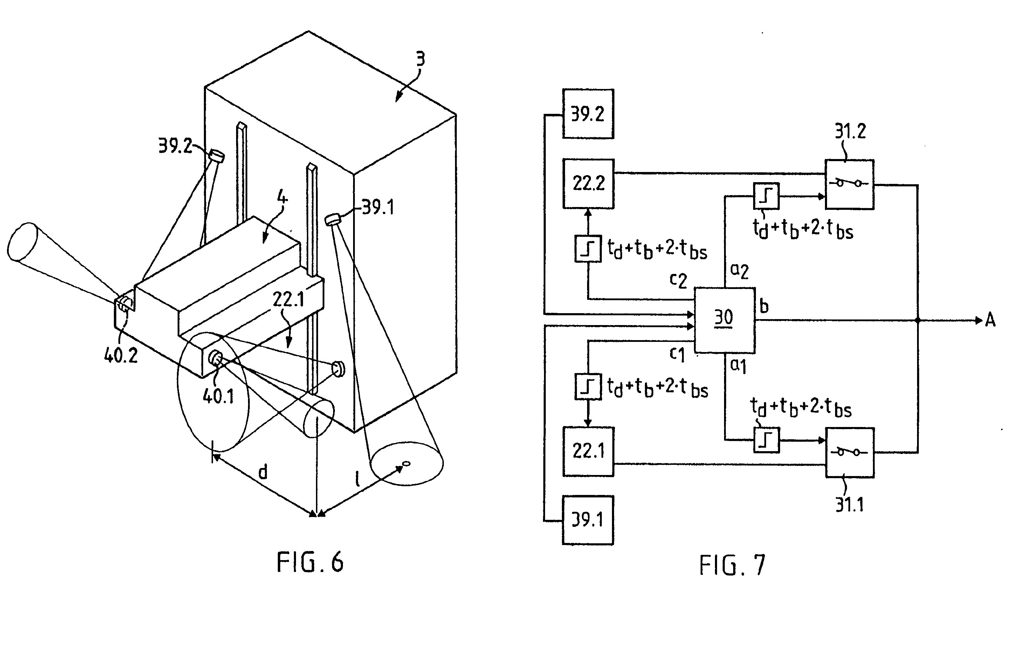

Figur 6 zeigt eine Anordnung von 2 Leitsensorenpaaren, die es erlaubt, neben der Höhe der Ballen (durch Sensor 39) auch deren Breite (durch Sensor 40) zu detektieren Es ist damit möglich, dass ein solcher Überwachungsbereich kombiniert mit Schutzvorhängen bestehend aus senkrecht gerichteten Detektoren dazu benutzt werden kann, um beim Durchgang über Ballen von limitierter Breite Teile der Schutzvorhänge in aktivem Zustand zu belassen. Auf diese Art und Weise wird die seitliche Lücke, die der Ballen offen lässt und durch die Abtragwalzen zugänglich sind, durch einen entsprechenden Schutzvorhang geschlossen.

Selbstverständlich können neben der räumlichen Form von Ballen noch zusätzliche Kriterien (bspw. Änderung des Signals durch Bewegung des Objektes, Oberflächenbeschaffenheit) beigezogen werden, um mit Sicherheit Textilballen von anderen Objekten unterscheiden zu können. Detektiert der Leitsensor ein Objekt und identifiziert die übergeordnete Intelligenz es als "Nicht-Ballen", erzeugt sie ein Alarmsignal, das die Schutzmassnahmen einleitet. Ist das von den Leitsensoren detektierte Objekt ein Ballen, werden die Schutzvorhänge entsprechend seiner Grösse konfiguriert.

Zur näheren Erläuterung dieses Schutzprinzips sei nun auf das Blockschema in Figur 7 verwiesen. Die beiden Leitsensoren 39.1 und 39.2 oder entsprechende Leitsensorenpaare erzeugen dauernd Signale, die von der Intelligenz 30 dauernd verarbeitet werden mit dem Ziel, in jedem Moment zu wissen, ob sich an den erfassten Stellen Objekte befinden und wenn ja, Ballen oder nicht Ballen. Die Reaktionen des Systems sind dann die Folgenden :

- Detektiert der in Fahrtrichtung vordere Leitsensor 39.1 ein Objekt, das von der Intelligenz 30 als Ballen voller Grösse identifiziert wird, wird Schalter 31.1 über Ausgang $a_1$ mit einer Verzögerung, die der Strecke d (siehe Figur 3) entspricht, geöffnet, so dass Alarmsignale des Schutzvorhangs 22.1 unterdrückt werden. Dasselbe geschieht mit dem Schalter 31.2 aber mit einer Verzögerung, die im wesentlichen der Strecke d + b + 2·$b_s$ entspricht, sodass der in Fahrtrichtung hintere Schutzvorhang 22.2 später desaktiviert wird.

- Detektiert einer der Leitsensoren 39.1, 39.2 ein Objekt, das von der Intelligenz als "Nicht-Ballen" identifiziert wird, wird über Ausgang b ein Alarmsignal weitergeleitet.

- Detektiert der in Fahrtrichtung vordere Leitsensor ein Objekt, das die Intelligenz als Ballen beschränkter Grösse identifiziert, werden über die Ausgänge c.1 und c.2 mit Verzögerungen, die für den Schutzvorhang 22.1 der Strecke d, für den Schutzvorhang 22.2 im wesentlichen der Strecke d + b + 2·$b_s$ entspricht, die Schutzvorhänge entsprechend konfiguriert.

- Detektiert der in Fahrtrichtung vordere Leitsensor 39.1 kein Objekt, die Schutzvorhänge sind aber desaktiviert (Schalter 31.1 und 31.2 offen) oder für beschränkte Ballen konfiguriert, werden die Schalter 31.1 und 31.2 mit entsprechenden Verzögerungen wieder geschlossen oder die Schutzvorhänge, auch mit den entsprechenden Verzögerungen, wieder in den Status "kein Ballen" gebracht.

Die Masse d, b, $b_s$ sind auf die Zentren der Erfassungsbereiche bezogen. Da letztere jedoch eine räumliche Ausdehnung besitzen, muss dies für die zeitlichen Verzögerungen beim Konfigurieren der Schutzvorhänge und bei deren aktivieren/desaktivieren berücksichtigt werden.

Neben der erwähnten Möglichkeit der Abtastung der Objekthöhe können weitere Kriterien zur Unterscheidung Person/Textilballen herbeigezogen werden, insbesondere :

a) Ein erkanntes Objekt muss eine minimale Ausdehnung haben, um es der Gruppe Textilballen zuordnen zu können.

b) Die Flanke des Gegenstandes muss eine bestimmte Steilheit haben, um ihn den Textilballen zuordnen zu können.

c) Die Oberfläche des Gegenstandes muss eine typische Form aufweisen (Struktur der Baumwollflocken) ; Mustererkennung.

d) Die Ableitung des durch die Sensoren registrierten Signals muss eine typische Form aufweisen, um den Gegenstand den Störgegenständen zuordnen zu können.

Um während einem Abtragdurchgang bei unbekanntem Ballenprofil die Ballen erkennen zu können, kann in einer anderen Ausführungsform der Erfindung auch ein mechanisch wirkender Leitsensor eingesetzt werden. Zur Erfassung der Objektgrösse (Kriterium a) können bspw. ein oder mehrere seitlich des Abtragorgans montierte, druckempfindliche Sensor vorgesehen werden. In analoger Weise wie bei einem Ultraschall-Leitsensor wird ein über eine gewisse Zeit konstant bleibender Druck und/oder das abgetastete Profil als Unterscheidungskriterium Ballen/anderer Gegenstand beigezogen. Der Sensor selber wird an einem beweglichen und/oder elastischen Montagearm befestigt, damit er bei Vorschub des Abtragorgans dem ertasteten Gegenstand bzw. einem Ballen ausweichen kann.

## 1.4 Im Schutzvorhang integrierte Leitsensoren

Bei geeigneter Anordnung können die Leitsensoren auch Teile der Schutzvorhang-Sensorik selber sein. Das System entspricht in einem solchen Fall dem unter dem Titel "Intelligente Sensoren als Schutzsensoren" beschriebenen System oder einer Kombination eines "gewöhnlichen" Schutzvorhangs mit dem System mit Leitsensoren. Es handelt sich dabei um einen Schutzvorhang, dessen Sensoren zum Teil reine Schutzsensoren sind, zum Teil aber die Leitsensorfunktion ebenfalls übernehmen.

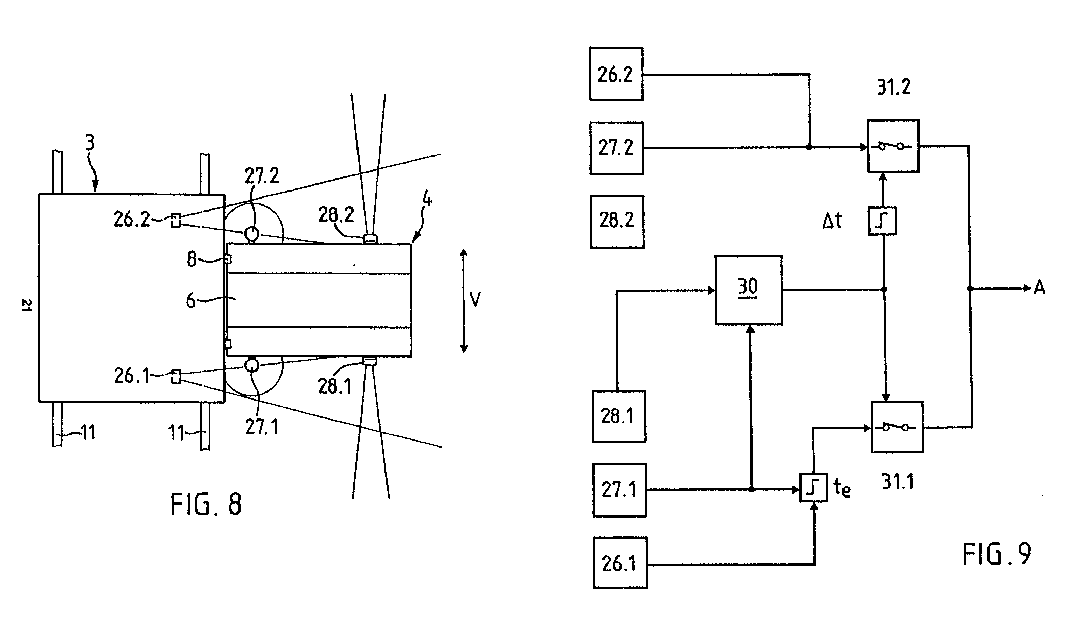

Eine Ausführungsform eines solchen Systems, das durch seine Einfachheit besonders vorteilhaft ist, wird anhand der Figuren 8 und 9 erläutert. Figur 8 zeigt die Anordnung der Sensoren. Die seitlichen Schutzvorhänge bestehen aus je drei Sensoren. Die Sensoren 26.1, 26.2 und 27.1, 27.2 entsprechen den in den Figuren 1 und 2 bereits beschriebenen Sensoren. Weiter sind am Abtragorgan zwei weitere Sensoren 28.1, 28.2 positioniert, die parallel zur Vorschubrichtung bzw. leicht gegen den Boden geneigt in je entgegengesetzter Richtung ausgerichtet sind. Für alle Sensoren werden hier bspw. Ultraschallsensoren eingesetzt. Die Sensoren 26 und 27 haben die Aufgabe von Schutzsensoren, das heisst, sie generieren ein Alarmsignal für jedes Objekt, das ihren Bereich passiert, sei es ein Ballen oder nicht. Die beiden Bereiche ergeben einen lückenlosen, seitlichen Schutzvorhang. Die Sensoren 27 übernehmen zudem noch die Aufgabe von Leitsensoren und zwar zusammen mit den Sensoren 28. Leitsensoren und Schutzvorhänge erfassen die Objekte vorzugsweise mindestens annähernd gleichzeitig. Die übergeordnete Intelligenz wir derart realisiert, dass ein Objekt, das von Sensor 27 detektiert wird zur selben Zeit, da es von Sensor 28 einen Abstand hat, der dem seitlichen Überwachungsbereich des Sensors 27 entspricht, als Ballen identifiziert wird, alle anderen Objekte als gefährdete Objekte.

Aus Figur 9 ist das Arbeitsschema der Steuerung des in Figur 8 abgebildeten Schutzvorhangs dargestellt. Die Signale der in Fahrtrichtung der Maschine vorderen Sensoren 27.1 und 28.1 werden dauernd einem Rechner 30 übergeben, der diese permanent vergleicht:

Erhält der Rechner 30 von den Sensoren 27.1 und 28.1 Signale, die den Kriterien für einen Ballen entsprechen, bewirkt dieser eine sofortige Öffnung des Schalters 31.1. Der Schalter 31.2 wird mit einer Verzögerung $\Delta t$ geöffnet, die (bei einer bestimmten Vorschubgeschwindigkeit v) der Distanz der beiden Schutzvorhänge entspricht. Die Öffnung des Schalters 31.1 ist zudem gegenüber dem Eingang der entsprechenden Signale von den Sensoren um die Auswertzeit $t_e$ verzögert, die Leitsensoren und Rechner benötigen, um die erforderlichen Signale zu erfassen und eine Signalauswertung des vom Leitsensor 39.1 stammenden Signals vorzunehmen.

Erhält die Intelligenz 30 von den Sensoren 27.1 respektive 28.1 Signale, die den Kriterien für das Ende eines Ballens entsprechen, werden die Schalter 31.1 respektive 31.2 geschlossen. Für den Schliessvorgang gilt in bezug auf die Verzögerung dasselbe wie für das Öffnen. Detektiert einer der Schutzsensoren 26.1, 26.2 oder 27.1, 27.2 ein Objekt, wird ein Alarmsignal generiert, wobei dasjenige der vorderen Schutzsensoren 26.1, 27.1 um die Zeit $t_e$ verzögert und über den entsprechenden Schalter 31.1, 31.2 weitergeleitet oder von ihm unterdrückt wird.

Die Verzögerungszeit $t_e$ ist notwendig, damit die Schalter auf jeden Fall in der richtigen Position sind, wenn die Alarmsignale eintreffen. Die Totzeit macht das System den Systemen mit ballenneutralen und intelligenten Schutzsensoren sehr ähnlich, es gilt denn auch alles, was im Zusammenhang mit jenen Systemen über die Totzeit ausgesagt wurde.

Für besondere Anwendungen kann der Erfassungsbereich der Leitsensoren (bezogen auf die Vorschubrichtung) auch *hinter* dem Erfassungsbereich des Schutzvorhangs liegen. Diesfalls wird die Verzögerungszeit $t_e$ entsprechend angepasst bzw. verlängert. Die Objekte werden also zuerst durch den Schutzvorhang erfasst und erst *nachher* durch den Leitsensor bzw. die Leitsensoren, wobei die Verzögerungszeit $t_e$ gewährleistet, dass bei Ballen dennoch kein Alarmsignal bewirkt wird. Das entsprechende Verfahren erlaubt insbesondere konstruktiv günstige Anordnungsmöglichkeiten der Leitsensoren.

Zu beachten ist, dass sich das erfindungsgemässe Verfahren für nicht nur für die beschriebenen, konstruktiven Anordnungsmöglichkeiten der Leitsensoren eignet, auch wenn die beschriebenen Anordnungen bevorzugt werden.

## 2. Selbstüberwachung der Schutzeinrichtung

Um die Zuverlässigkeit der erfindungsgemässen Sensoreinrichtung noch weiter erhöhen zu können, wird vorzugsweise ein Selbstüberwachungssystem vorgesehen. Entweder werden Referenzobjekte, Referenzsender oder -empfänger in den Messraum der Sensoren eingebracht und/oder der Sender eines Sensors wird als Referenzsignal für den Empfänger eines anderen Sensors verwendet.

Bei einer Infrarot-Sensorik wird eine definierte Referenz-Heizquelle an einer unzugänglichen Stelle der Abtragmaschine oder am Boden vorgesehen. Eine weitere Möglichkeit besteht darin, in bestimmten Testintervallen eine Referenz-Heizquelle zu zünden. Diesfalls kann diese auch im Überwachungsbereich, bspw. unmittelbar vor dem Sensor angeordnet sein. Die Heizquelle kann z.B. eine Strahlungsintensität abgeben, die etwa einer menschlichen Hand entspricht, womit nicht das Ansprechen an sich, sondern auch die Ansprechzeit der Sensorik überwacht werden kann. Für andere Sensoren können in entsprechender Weise adäquate Referenz-Objekte bzw. -sender in Intervallen aktiviert werden.

Im Beispiel gemäss Figur 10 ist eine Ultraschallsensorik eingesetzt. Zusätzlich kann in diesem Ausführungsbeispiel im Stirnbereich eine Schutzplatte 15 vorhanden sein. Zwischen den beiden seitlichen Schutzvorhängen liegt ein horizontaler Schutzvorhang 23. Dieser Schutzvorhang 23 wird durch mehrere in einer horizontalen Linie am Maschinengestell 3 angeordnete Sensoren 24.1-24.4 aufgespannt. Der horizontale Schutzvorhang 23 schliesst zusammen mit den seitlichen Schutzvorhängen, die durch Sensoren 29.1-29.4 und 28.1-28.4 am Maschinengestell bestimmt werden, und der Schutzplatte 15 das Überwachungsgebiet. Derart kann auch von vorne nicht unbemerkt unter der Schutzplatte hindurch in den Gefahrenbereich unter den Abtragwalzen eingedrungen werden.

Die Anordnung der Elemente für das Selbstüberwachungssystem sollen anhand dieses Ausführungsbeispiels für vier Ausführungsvarianten näher erläutert werden.

Es ist möglich, das Ultraschallsignal von zwei oberen Ultraschallsendern/-empfängern 28.1, 28.2 als Referenzsignal für die unteren Ultraschallsender/-empfänger 27.1-27.4 einzusetzen und umgekehrt. Dabei muss zum Beispiel durch einen entsprechend im Kreuzungsgebiet der Detektionsbereiche der beiden Sensoren angebrachten Reflektor mindestens ein kleiner Teil der von einem Sensor ausgestrahlten Schallenergie dem anderen Sensor zugehalten werden. Dabei werden die Sender/Empfänger so gesteuert, dass sich Arbeits- und Testzyklen der oberen und unteren Sender abwechseln. Nach abgeschlossenem Test werden die Rollen vertauscht. Solange die entsprechenden Signale gegenseitig empfangen werden, ist dadurch die Funktionsbereitschaft der Sensorik nachgewiesen. Durch eine entsprechende Überwachungseinheit kann dies überwacht werden. Sobald ein Signal des Sensors, der sich im Arbeitszyklus befindet, vom testenden Sensoren nicht empfangen werden sollte, können besondere Massnahmen eingeleitet werden, bspw. ein Abschalten der Maschine, Warnsignal etc.

Sind die beiden oberen Sensoren 28 als Distanzmessgeräte ausgelegt, können sie getestet werden, indem sie bei gewissen Referenzdistanzen, z.B. gegenüber dem Boden, mit dem Sollwert und gegenseitig verglichen werden. Solange die entsprechenden Werte übereinstimmen, sind die Sensoren in Ordnung. Diese Testmethode kann auch eingesetzt werden für Sensoren, die am Abtragorgan, also in variabler Höhe, angebracht sind, denn der Rechner kann die Höhe des Abtragorgans aus der Anfangshöhe und der Zustellung berechnen.

Eine dritte Möglichkeit besteht darin, an der Schutzplatte 15 an deren seitlichen Kante zwei Referenz-Objekte 17.1, 17.2 mit guter Ultraschall-Reflektion anzubringen. Unter Umständen kann die Schutzplatte, die in den seitlichen Überwachungsbereich reicht, selber als Referenzobjekt dienen. Grundsätzlich ist es auch möglich, dass die Referenzobjekte am Abtragorgan, z.B. auch innerhalb des Wirkungsbereichs des Schutzvorhangs, angebracht werden. Bedingung ist dann natürlich, dass die Objekte gezielt sehr wenig reflektieren, oder z.B. so einen grossen Abstand von der Strahlenachse der Sensoren haben, dass die von den Referenzobjekten zurückkommende (Schall)-leistung nicht ausreicht, um vom Sensor registriert zu werden. In einem periodisch wiederkehrenden Testzyklus braucht nun lediglich entweder die Sendeleistung verstärkt zu werden, die Empfindlichkeit des Empfängers erhöht oder die Ansprechschwelle des empfangenen Signals reduziert zu werden, damit das Referenzobjekt detektiert und damit der Sensor getestet werden kann. Selbstverständlich ist es auch möglich, anstelle von Referenz-Objekten 17.1, 17.2 spezielle Referenz-Sensoren vorzusehen. Bei einer Infrarotsensorik können in analoger Weise die Referenz-Objekte 17.1, 17.2 zwei Heizquellen sein.

Als vierte Möglichkeit bietet sich an, die Ballengruppen als Referenzobjekt beizuziehen (nicht anwendbar für ballenneutrale Sensoren). Befindet sich die Maschine gerade am Bearbeiten von Ballen, so wird die Schutzfunktion der seitlichen Schutzvorhänge, wie schon erwähnt, durch die Ballen übernommen. Während dieser Zeit müssen die Sensoren die Ballen detektieren. Befindet sich die Maschine zwischen zwei Ballen, sind also die Überwachungsbereiche durch die Sensoren erfasst, so darf sich kein Objekt innerhalb diesen befinden. Mit diesen beiden Kriterien kann festgestellt werden, ob die Sensorik einwandfrei arbeitet und ob sich ausser den zu bearbeitenden Ballen kein Objekt in den Überwachungsbereichen befindet. Da die beiden möglichen Fehlverhalten (Sensordefekt und Person im Überwachungsbereich) dieselben Schutzmassnahmen eingeleitet werden müssen, spielt es auch keine Rolle, wenn zwischen den festgestellten Fehlverhalten nicht unterschieden wird.

In einer bevorzugten Ausführungsvariante, insbesondere wenn rein sensorische Schutzeinrichtungen eingesetzt werden, wird zur Selbstüberwachung der Sensorik ein Referenzobjekt direkt an der Stirnseite der Gehäusekonstruktion 6 des Abtragorgans 4 angeordnet.

Um die Sicherheit der Schutzeinrichtung weiter zu erhöhen, ist darauf zu achten, dass vorzugsweise sämtliche Signale aktiv LOW übertragen werden.

Es muss beachtet werden, dass sich die Schutzeinrichtung nicht nur mit horizontal bewegten Ballenabtragmaschinen einsetzen lässt. Sofern sich das Abtragorgan entlang einer geneigten Fläche bewegt, ist es auch hier wesentlich, dass die Sensorik und Steuerung so ausgelegt ist, dass der Überwachungsbereich mit den festen Gegenständen zusammen eine geschlossene Hülle um den Gefahrenbereich bildet.

Ausserdem ist leicht zu erkennen, dass das Steuerprinzip, wenngleich vorstehend nur im Zusammenhang mit einem sensorischen Schutzsystem beschrieben, in analoger Weise für mechanische Schutzsystem eingesetzt werden kann. Diesfalls werden die mechanischen Schutzeinrichtungen so gesteuert, dass sie während der Relativbewegung zwischen Abtragmaschine und Ballen letzteren nicht in die Quere kommen, z.B. werden Schutzplatten angehoben oder weggeschwenkt. Zudem ist es möglich, Arretierungen der mechanischen Schutzmittel in Abhängigkeit der Leitsensor-Signale freizugeben, derart, dass die mechanischen Schutzmittel bei Kontakt mit Ballen gegenüber ihrer sonstigen, festen Stellung bewegbar sind.

### 3. Steuergerät

Vorzugsweise werden durch ein einheitliches Steuermodul, welche die erwähnte Intelligenz des Schutzsystems repräsentiert, sämtliche Steuerund Überwachungsfunktionen übernommen. Einerseits werden durch das Steuergerät (Recheneinheit) die Daten der Leitsensoren für die Steuerung der Schutzsensoren ausgewertet, andererseits werden die Messungen möglichst aller Sensoren permanent überwacht und bei Bedarf die erforderlichen Schutzmassnahmen, insbesondere das Abschalten der Abtragwalzen, eingeleitet. Zu diesem Zweck werden dem Steuergerät allfällige zusätzliche Daten zugeführt, bspw. Daten der Referenzsensoren (z.B. Umgebungstemperatur), Daten der Referenz-Objekte. Die Daten über das Ballenprofil werden entweder in der Steuerung der Sensorik selber gespeichert oder von der Hauptsteuerung der Maschine zur Verfügung gestellt und periodisch abgefragt.

Die Steuereinheit wird vorzugsweise am oder im Maschinengestell oder im Abtragorgan untergebracht. Bei Bedarf kann sie von der Maschine entfernt an einer Steuerkonsole angebracht sein. Auch hier ist darauf zu achten, dass sämtliche Signale aktiv LOW übertragen werden, um beim Ausfall einer ganzen Systemgruppe die Schutzmassnahmen zu aktivieren.

In bezug auf die Schutzvorrichtung, die anhand der vorstehend beschriebenen Ballenabtragmaschine erläutert wird, muss betont werden, dass sich die Erfindung auch mit anderen Textilmaschinen einsetzen lässt. Prinzipiell kann die Erfindung zusammen mit allen bearbeitenden Maschinen, insbesondere mit fahrbaren, bearbeitenden Maschinen verwendet werden. Es ist aber auch möglich, bspw. eine Ballenabtragmaschine starr anzuordnen und die Ballen bspw. auf einem Förderband relativ zur Maschine zu bewegen.

### Patentansprüche

1. Verfahren zur sensorischen Steuerung eines Schutzsystems an einer Textilmaschine, **dadurch gekennzeichnet**, dass
    a. mindestens während einem Initialdurchgang mittels mindestens einem Leitsensor (39, 40) das in Vorschubrichtung des Abtragorgans (4) liegende Gebiet abgetastet und überwacht wird ;
    b. bei Registrierung eines Ballens durch eine mit den Leitsensoren (39, 40) verbundene Auswerteinheit (30) mindestens ein Schutzvorhang (21-23) desaktiviert wird, unmittelbar bevor ein Ballen (2, 2') durch diesen Schutzvorhang erfasst würde ;
    c. in den folgenden Abtragdurchgängen die Schutzvorhänge (21-23) in Abhängigkeit des bekannten Ballenprofils und/oder des oder der Leitsensoren (39) aktiviert und desaktiviert werden ;
    d. bei Detektion eines Fremdgegenstandes, insbesondere Personen, durch die Schutzvorhänge (35, 36) Schutzmassnahmen ausgelöst werden.

2. Verfahren nach Anspruch 1, **dadurch gekennzeichnet**, dass mittels mindestens einem Leitsensor (39) das Objektprofil entlang der Ballenabtragstrecke abgetastet wird und dieses Profil oder dessen Ableitung als Eingangssignal für die Auswerteinheit (30) benutzt wird.

3. Verfahren nach Anspruch 1 oder 2, **dadurch gekennzeichnet**, dass mittels mindestens einem Leitsensor (39) die Oberflächenstruktur der Objekte entlang der Ballenabtragstrecke erfasst und als Eingangssignal für eine mustererkennungsfähige Auswerteinheit (30) benutzt wird.

4. Verfahren nach einem der Ansprüche 1 bis 3, **dadurch gekennzeichnet**, dass mindestens das Erfassungsgebiet eines Leitsensors (39) die sich entlang der Ballenabtragstrecke befindlichen Objekte erfasst, bevor diese in den Bereich eines Schutzvorhangs (21-23) kommen, wobei diese Zeit mindestens dem Wert $t_d = d/v$ entspricht. (v = Relativgeschwindigkeit Maschine/Ballen ; d = Distanz zwischen Erfassungsbereich des Leitsensors und Erfassungsbereiche des Schutzvorhangs).

5. Verfahren nach einem der Ansprüche 1 bis 3, **dadurch gekennzeichnet**, dass die sich entlang der Ballenabtragstrecke befindlichen Objekte mindestens annähernd gleichzeitig durch die Leitsensoren und einen der Schutzvorhänge (21-23) erfasst werden.

6. Verfahren nach einem der Ansprüche 1 bis 3, **dadurch gekennzeichnet,** dass die sich entlang der Ballenabtragstrecke befindlichen Objekte zuerst durch einen der Schutzvorhänge (21-23) und nachher durch die Leitsensoren erfasst werden.

7. Verfahren nach Anspruch 5, **dadurch gekennzeichnet,** dass das Ausgangssignal des Schutzvorhangs (21-23) der Auswerteinheit (30) um eine Zeit $t_v$ verzögert zugeführt wird, wobei diese Zeit $t_v$ mindestens der Erfassungs- und Auswertzeit für das vom Leitsensor (39) stammende Signal entspricht.

8. Verfahren nach Anspruch 2 und 5, **dadurch gekennzeichnet,** dass das Überwachungsgebiet des oder der Schutzvorhänge (21-23) in Abhängigkeit des durch die Leitsensoren (39) ermittelten oder berechneten Ballenprofils laufend derart angepasst wird, dass der durch die Textilballen (2, 2') eingenommene Raum durch die Schutzvorhänge (21-23) nicht erfasst wird.

9. Verfahren nach einem der Ansprüche 1 bis 8, **dadurch gekennzeichnet,** dass die Empfindlichkeit mindestens eines Teils der Sensoren (24-29, 39) während dem Betrieb in Abhängigkeit der Umgebungsparameter gesteuert oder geregelt wird.

10. Verfahren nach einem der Ansprüche 1 bis 9, **dadurch gekennzeichnet,** dass zur Selbstüberwachung der Sensoren (22-29, 37, 39) mindestens ein Referenz-Objekt (17.1, 17.2) in Intervallen im Erfassungsgebiet der Sensoren aktiviert wird.

11. Verfahren nach einem der Ansprüche 1 bis 10, **dadurch gekennzeichnet,** dass das Ausgangssignal der Leitsensoren (39) zur Steuerung von mechanischen Schutzmitteln verwendet wird.

12. Ballenabtragmaschine mit einer sensorischen und/oder mechanischen Schutzeinrichtung, **dadurch gekennzeichnet,** dass am Maschinengestell (3) und/oder am Abtragorgan (4) mindestens ein Leitsensor (39) angeordnet ist, zum Abtasten eines seitlich des Abtragorgans (4) liegenden Bereichs, der mit einer Auswerteinheit (30) zur Steuerung der Schutzvorhänge verbunden ist.

13. Ballenabtragmaschine nach Anspruch 12, **dadurch gekennzeichnet,** dass je seitlich des Abtragorgans zwei Leitsensoren (39) in einem Abstand angeordnet sind, der grösser ist als die Maximalabmessungen des zu erfassenden Objektes.

14. Ballenabtragmaschine nach Anspruch 13, **dadurch gekennzeichnet,** dass die Leitsensoren (39) derart angeordnet sind, dass deren Erfassungsgebiete mindestens 1,2 m auseinanderliegen.

15. Ballenabtragmaschine nach einem der Ansprüche 12 bis 14, **dadurch gekennzeichnet,** dass mindestens ein Teil der Sensorik (26, 37) und-/oder die Leitsensoren (39, 40) höhenverstellbar am Maschinengestell (3) montiert sind.

16. Ballenabtragmaschine nach einem der Ansprüche 12 bis 15, **dadurch gekennzeichnet,** dass mindestens ein Leitsensor (39) als Distanzmessgerät ausgebildet ist.

17. Ballenabtragmaschine nach einem der Ansprüche 12 bis 16, **dadurch gekennzeichnet,** dass mindestens ein Leitsensor (39) als Ultraschallsensor ausgebildet ist.

18. Ballenabtragmaschine nach einem der Ansprüche 12 bis 17, **dadurch gekennzeichnet,** dass mindestens ein Leitsensor (39) als optischer Sensor ausgebildet ist.

19. Ballenabtragmaschine nach einem der Ansprüche 12 bis 18, **dadurch gekennzeichnet,** dass mindestens ein Leitsensor (39) als mechanischer Sensor ausgebildet ist.

20. Ballenabtragmaschine nach einem der Ansprüche 12 bis 19, **dadurch gekennzeichnet,** dass mindestens ein Leitsensor (40) mindestens annähernd parallel zur Bewegungsrichtung des Abtragorgans ausgerichtet ist.

21. Ballenabtragmaschine nach einem der Ansprüche 12 bis 20, **dadurch gekennzeichnet,** dass zur Selbstüberwachung der Sensorik (24-29, 37, 39) mindestens ein Referenz-Objekt innerhalb eines durch die Sensorik (26-29, 37) erfassten Gebiets angeordnet ist.

22. Ballenabtragmaschine nach Anspruch 21, **dadurch gekennzeichnet,** dass im Bereich der Stirnseite eine Schutzplatte (15) angeordnet ist, die in die Überwachungsbereiche der seitlichen Schutzschirme (22.1, 22.2) ragt.

23. Ballenabtragmaschine nach Anspruch 22, **dadurch gekennzeichnet,** dass zwei Referenz-Objekte (17.1, 17.2) an den seitlichen Enden, an der Innenseite der Schutzplatte (15) angeordnet sind.

24. Ballenabtragmaschine nach Anspruch 21, **dadurch gekennzeichnet,** dass zur Selbstüberwachung der Sensorik ein Referenzobjekt an der Stirnseite der Gehäusekonstruktion (6) des Abtragorgans (4) angeordnet ist.

FIG. 1

FIG. 2

FIG. 3

FIG. 10

FIG.4

FIG.5

FIG. 6

FIG. 7

EP 0 435 816 A1

FIG. 8

FIG. 9

EP 0 435 816 A1

Europäisches
Patentamt

## EUROPÄISCHER RECHERCHENBERICHT

Nummer der Anmeldung

EP 90 81 0799

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
| A | DE-A-3733972 (HERGETH HOLLINGSWORTH GMBH) <br> * das ganze Dokument * <br> --- | 1, 22 | D01G31/00 <br> F16P1/02 <br> F16P3/14 |
| A | US-A-4479285 (RAGAN,E.D.) <br> * Spalte 2-3; Figuren 1, 2 * <br> --- | 1, 2 | |
| A | EP-A-0265756 (HERGETH,H.) <br> --- | | |
| A | FR-A-2489375 (TRUTZSCHLER GMBH & CO.KG) <br> ------ | | |

**RECHERCHIERTE SACHGEBIETE (Int. Cl.5 )**

D01G
F16P

Der vorliegende Recherchenbericht wurde für alle Patentansprüche erstellt

| Recherchenort | Abschlußdatum der Recherche | Prüfer |
|---|---|---|
| DEN HAAG | 15 APRIL 1991 | MUNZER E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...............
& : Mitglied der gleichen Patentfamilie, übereinstimmendes Dokument

EPO FORM 1503 03.82 (P0403)